# EUROPÄISCHE PATENTSCHRIFT

(11) **EP 1 029 894 B1**
(45) Veröffentlichungstag und Bekanntmachung des Hinweises auf die Patenterteilung: **02.01.2004**
(21) Anmeldenummer: 00100622.0
(22) Anmeldetag: 13.01.2000
(51) Int. Cl.: C08L 67/06, C08F 283/01, C08L 51/08, F21V 7/22

(54) **Härtbare Formmasse**
Hardenable moulding composition
Matière à mouler durcissable

(30) Priorität: 18.02.1999 DE 19907016
(43) Veröffentlichungstag der Anmeldung: 23.08.2000
(73) Patentinhaber: Menzolit-Fibron GmbH, 75015 Bretten (DE)
(72) Erfinder: Belin, Jean-Gilles, 41120 Seur (FR)
(74) Vertreter: Uppena, Franz, Dr.

(56) Entgegenhaltungen:
- GB-A- 2 303 631
- US-A- 3 637 578
- US-A- 4 806 603
- US-A- 5 143 964
- US-A- 5 260 368
- US-A- 5 558 943
- US-A- 5 623 024

## Beschreibung

Die Erfindung betrifft die Verwendung eine auf Polyester basierenden härtbaren Formmasse (Bulk Moulding Compound, BMC) mit Polyphenylenoxid oder modifiziertem Polyphenylenoxid als Additiv zur Herstellung von Scheinwerferreflektoren.

Auf Polyester basierende härtbare Formmassen sind bei der Herstellung von Formteilen weit verbreitet, z. B. im Automobilbau. Die Vorteile dieser Produkte (gute Formbarkeit der Kunststoffmasse, gute Oberfläche und thermische Stabilität der Formteile bei den bisher geforderten Betriebstemperaturen bis ca. 180 °C) sind bekannt.

So wird in der GB 2 303 631 A eine Formmasse zur Herstellung. von Scheinwerferreflektoren beschrieben, die ein ungesättigtes Polyesterharz, Füllstoffe, Glasfasern und thermoplastische Harze, die ein Schrumpfen während des Härtens verhindern, enthält.

In der EP 605 855 A2 wird eine schwundarm härtbare Polyesterformmasse beschrieben, die eine stryrolische Lösung eines ungesättigten Polyesters aus Maleinsäure, Propylenglycol und Neopentylglycol und als Niederschrumpfkomponente ein Polyvinylacetat, ein Polymethylmethacrylat und/oder einen oligomeren gesättigten Polyester oder ein Polyesterurethan enthält.

Weiterhin werden in der EP 542 494 A1 und der US 5 489 655 härtbare Polyesterformmassen beschrieben.

Heutige Scheinwerferreflektoren haben aufgrund eines neuen Designs eine größere Tiefe, was eine Erhöhung der Scheinwerferinnentemperatur relativ zu bisher üblichen Scheinwerferreflektoren zur Folge hat. Die aus den bisher üblichen Formmassen hergestellten Scheinwerferreflektoren haben den Nachteil, daß sie bei erhöhten Temperaturen (180 °C und darüber) trübe werden, wobei sowohl der eigentliche Reflektor als auch das Abdeckglas von dieser die Lichtausbeute verringernden Eintrübung betroffen sind.

Aufgabe der Erfindung ist es, die Nachteile des Standes der Technik zu überwinden und eine auf Polyester basierende härtbare Formmasse zu schaffen, aus der sich in bekannter Weise Scheinwerferreflektoren herstellen lassen, die bei Scheinwerfertemperaturen von 180 °C (und darüber) eine deutlich verminderte (relativ zu aus bisher bekannten Formmassen hergestellten Scheinwerferreflektoren) oder gar keine Eintrübung erkennen lassen.

Gelöst wird die der Erfindung zugrundeliegende Aufgabe durch die Verwendung einer Formmasse gemäß Anspruch 1. Vorzugsweise Ausgestaltungen der Erfindung sind in den Unteransprüchen 2 bis 9 charakterisiert.

Es wurde gefunden, daß zwischen der Eintrübung des Scheinwerferreflektors und dem Gewichtsverlust bei Erhitzen der gehärteten Formmasse, aus der der Scheinwerferreflektor hergestellt wurde, eine Korrelation besteht. So läßt sich der Eintrübungseffekt deutlich vermindern, bzw. eliminieren, wenn die auf Polyester basierende härtbare Formmasse Polyphenylenoxid oder modifiziertes Polyphenylenoxid als Additiv enthält, welches eine Reduktion des Gewichtsverlustes der gehärteten Formmasse bei Erhitzen bewirkt. Bei Verwendung des erfindungsgemäßen Additivs läßt sich überraschenderweise der Gewichtsverlust der gehärteten Formmasse nach 4-stündigem Erhitzen bei 180 °C auf weniger als 0,4 % reduzieren.

Der Zusatz von Polyphenylenoxid oder modifiziertem Polyphenylenoxid zu bekannten, auf Polyester basierenden härtbaren Formmassen bewirkt diesen geringeren Gewichtsverlust. Zwar werden in der US 4 785 076 A und der EP 149 454 A thermoplastische Massen mit Polyphenylenoxid als einem Hauptbestandteil beschrieben, wobei diese Massen vorteilhafterweise stabil gegen UV-Licht sind, ein Hinweis auf die dieser Erfindung zugrunde liegende spezielle Wirkung von Polyphenylenoxid als Additiv in Polyestermassen ist dagegen nicht bekannt.

Die erfindungsgemäß zu verwendende, auf Polyester basierende, härtbare Formmasse kann enthalten:
(a) eine Lösung von ungesättigtem Polyesterharz in Styrol
(b) Thermoplaste
(c) Styrol
(d) Peroxide
(e) Stearate
(f) Füllstoffe
(g) Inhibitoren
(h) Glasfasern
(i) weitere übliche Zusatzmittel
   und enthält als kennzeichnendes Merkmal
(k) Additiv, welches eine Reduktion des Gewichtsverlustes der gehärteten Formmasse bei Erhitzen bewirkt.

Die Inhaltsstoffe (a) bis (i) sind an sich bekannt, z.B. aus der EP 605 855 A2, EP 542 494 A1, GB 2 303 631 A oder aus der US 5 489 655. Als Additiv (k) werden Polyphenylenoxide oder modifizierte Polyphenylenoxide verwendet. Diese sind beschrieben z.B. in der US 3 306 874, US 3 306 875, US 3 257 357 und US 3 257 358.

Als vorteilhaft hat sich der Einsatz eines Polyphenylenoxides oder modifizierten Polyphenylenoxides mit einem Vicat B50/60N-Wert von 100 bis 220 °C, bevorzugt von 110 bis 150 °C, (nach ISO 306, Methode B), erwiesen.

Vorteilhaft ist das Polyphenylenoxid PPO® HH 195 mit einem Vicat B50/60N-Wert von 203 °C und besonders vorteilhaft das PPO® PX 1134 mit einem Vicat B50/60N-Wert von 115 °C (Hersteller jeweils General Electric).

Gute Ergebnisse werden mit einem Gewichtsanteil des Additivs von 5 bis 50 %, bevorzugt 8 bis 20 %, am Gewichtsanteil des eingesetzten Polyesterharzes erzielt.

Bei Betriebstemperaturen von Scheinwerferreflektoren von z. B. 180 bis 200 °C ist bei einem Scheinwerferreflektor, der unter der erfindungsgemäßen Verwendung der Polyphenylenoxid oder modifiziertes Polyphenylenoxid enthaltenen Formmasse hergestellt wurde, die unerwünschte Eintrübung entweder wesentlich geringer als bei einem Scheinwerferreflektor, der mit einer herkömmlichen Formmasse hergestellt wurde; oder die unerwünschte Eintrübung ist ganz eliminiert.

Die Erfindung wird nachfolgend anhand von Beispielen näher erläutert:

**Vergleichsbeispiel A:** Herstellung, Härtung und Bestimmung des Gewichtsverlustes einer herkömmlichen Formmasse

Aus

| | | |
|---|---|---|
| 13,3 | Gewichtsteilen | Maleinsäureharz (40 % in Styrol) |
| 1,3 | Gewichtsteilen | thermoplastischer Kautschuk aus Styrol-Butadien-Copolymer (z. B. Shell Kraton D-1102) |
| 3,5 | Gewichtsteilen | Polymethylmethacrylat |
| 5,44 | Gewichtsteilen | Styrol |
| 0,3 | Gewichtsteilen | Tert.-Butylperoctoat |
| 1,1 | Gewichtsteilen | Zinkstearat |
| 60,0 | Gewichtsteilen | Calciumcarbonat |
| 0,015 | Gewichtsteilen | Inhibitor (Parabenzochinon, 10 % Lsg.) |
| 14,0 | Gewichtsteilen | Glasfasern (6 mm) |

wurde in bekannter Weise in einem Mischer eine Formmasse hergestellt, die anschließend in einer Form bei 180 °C gehärtet wurde. Die gehärtete Formmasse wurde gewogen, dann während 4 Std. in einem Ofen bei 180 °C erhitzt und erneut gewogen. Der Gewichtsverlust betrug 0,4 %.

### Beispiel 1: Herstellung, Härtung und Bestimmung des Gewichtsverlustes einer erfindungsgemäßen Formmasse mit PPO® HH 195 als Additiv

Aus

| | | |
|---|---|---|
| 13,3 | Gewichtsteilen | Maleinsäureharz (40 % in Styrol) |
| 1,3 | Gewichtsteilen | thermoplastischer Kautschuk aus Styrol-Butadien-Copolymer (z.B. Shell Kraton D-1102) |
| 1,36 | Gewichtsteilen | Polyphenylenoxid PPO® HH 195 |
| 5,44 | Gewichtsteilen | Styrol |
| 0,3 | Gewichtsteilen | Tert.-Butylperoctoat |
| 1,1 | Gewichtsteilen | Zinkstearat |
| 60,0 | Gewichtsteilen | Calciumcarbonat |
| 0,015 | Gewichtsteilen | Inhibitor (Parabenzochinon, 10 % Lsg.) |
| 13,5 | Gewichtsteilen | Glasfasern (6 mm) |

wurde in bekannter Weise in einem Mischer eine Formmasse hergestellt, die anschließend in einer Form bei 180 °C gehärtet wurde. Die gehärtete Formmasse wurde gewogen, dann während 4 Std. in einem Ofen bei 180 °C erhitzt und erneut gewogen. Der Gewichtsverlust betrug 0,25 %.

### Beispiel 2: Herstellung, Härtung und Bestimmung des Gewichtsverlustes einer erfindungsgemäßen Formmasse mit PPO® PX 1134 als Additiv

Aus

| | | |
|---|---|---|
| 13,3 | Gewichtsteilen | Maleinsäureharz (40 % in Styrol) |
| 1,3 | Gewichtsteilen | thermoplastischer Kautschuk aus Styrol-Butadien-Copolymer (z.B. Shell Kraton D-1102) |
| 1,36 | Gewichtsteilen | Polyphenylenoxid PPO® PX 1134 |
| 5,44 | Gewichtsteilen | Styrol |
| 0,3 | Gewichtsteilen | Tert.-Butylperoctoat |
| 1,1 | Gewichtsteilen | Zinkstearat |
| 60,0 | Gewichtsteilen | Calciumcarbonat |
| 0,015 | Gewichtsteilen | Inhibitor (Parabenzochinon, 10 % Lsg.) |
| 13,5 | Gewichtsteilen | Glasfasern (6 mm) |

wurde in bekannter Weise in einem Mischer eine Formmasse hergestellt, die anschließend in einer Form bei 180 °C gehärtet wurde. Die gehärtete Formmasse wurde gewogen, dann während 4 Std. in einem Ofen bei 180 °C erhitzt und erneut gewogen. Der Gewichtsverlust betrug 0,2 %.

Gegenüber einer herkömmlichen Formmasse (0,4 % Gewichtsverlust, Vergleichsbeispiel A) konnte der Gewichtsverlust mit den erfindungsgemäßen Formmassen (0,25 %, bzw. 0,2 % Gewichtsverlust, Beispiele 1 und 2) deutlich reduziert werden.

### Beispiel 3: Herstellung von Scheinwerferreflektoren aus verschiedenen Formmassen und Vergleich des Eintrübeverhaltens

Aus den Formmassen aus dem Vergleichsbeispiel A und den erfindungsgemäßen Beispielen 1 und 2 wurden in bekannter Weise durch Einspritzen der Formmasse in eine Reflektorform, und durch anschließendes Waschen, Polieren und Beschichten des Rohlings mit einer Metallschicht Scheinwerferreflektoren hergestellt. Die Reflektoren wurden mit einem Glas verschlossen, während 100 Std. auf 180 °C erhitzt und das Glas visuell begutachtet. Das Glas des Scheinwerferreflektors aus Vergleichsbeispiel A war stark eingetrübt, während das Glas der Scheinwerferreflektoren aus den Beispielen 1 und 2 jeweils klar und ohne Eintrübung war.

## Patentansprüche

1. Verwendung einer auf Polyesterharz basierenden, härtbaren Formmasse zur Herstellung von Scheinwerferreflektoren, wobei die Formmasse ein Polyphenylenoxid oder modifiziertes Polyphenylenoxid als Additiv enthält.

2. Verwendung nach Anspruch 1, **dadurch gekennzeichnet, daß** das als Additiv verwendete Polyphenylenoxid oder modifizierte Polyphenylenoxid einen Vicat B50/60N-Wert von 100 bis 220 °C (nach ISO 306, Methode B) aufweist.

3. Verwendung nach Anspruch 2, **dadurch gekennzeichnet, daß** das als Additiv verwendete Polyphenylenoxid oder modifizierte Polyphenylenoxid einen Vicat B50/60N-Wert von 110 bis 150 °C (nach ISO 306, Methode B) aufweist.

4. Verwendung nach einem oder mehreren der Ansprüche 1 bis 3, **dadurch gekennzeichnet, daß** als Additiv Polyphenylenoxid mit einem Vicat B50/60N-Wert von 203 °C eingesetzt wird.

5. Verwendung nach einem oder mehreren der Ansprüche 1 bis 3, **dadurch gekennzeichnet, daß** als Additiv Polyphenylenoxid mit einem Vicat B50/60N-Wert von 115 °C eingesetzt wird.

6. Verwendung nach einem oder mehreren der Ansprüche 1 bis 5, **dadurch gekennzeichnet, daß** der Gewichtsanteil des Additivs Polyphenylenoxid oder modifiziertes Polyphenylenoxid 5 bis 50 % des Gewichtsanteiles des eingesetzten Polyesterharzes beträgt.

7. Verwendung nach einem oder mehreren der Ansprüche 1 bis 6, **dadurch gekennzeichnet, daß** der Gewichtsanteil des Additivs Polyphenylenoxid oder modifiziertes Polyphenylenoxid 8 bis 20 % des Gewichtsanteiles des eingesetzten Polyesterharzes beträgt.

8. Verwendung nach einem oder mehreren der Ansprüche 1 bis 7, **dadurch gekennzeichnet, daß** als Polyesterharz eine Lösung von Maleinsäureharz in Styrol eingesetzt wird.

## Claims

1. Use of a polyester-resin-based, curable moulding compound for the production of headlight reflectors, wherein the moulding compound contains a polyphenylene oxide or modified polyphenylene oxide as an additive.

2. Use according to claim 1, **characterised in that** the polyphenylene oxide or modified polyphenylene oxide used as an additive has a Vicat B50/60N value of 100 to 220°C (according to ISO 306, Method B).

3. Use according to claim 2, **characterised in that** the polyphenylene oxide or modified polyphenylene oxide used as an additive has a Vicat B50/60N value of 110 to 150°C (according to ISO 306, Method B).

4. Use according to one or more of claims 1 to 3, **characterised in that** polyphenylene oxide with a Vicat B50/60N value of 203°C is used as an additive.

5. Use according to one or more of claims 1 to 3, **characterised in that** polyphenylene oxide with a Vicat B50/60N value of I15°C is used as an additive.

6. Use according to one or more of claims 1 to 5, **characterised in that** the proportion by weight of the additive polyphenylene oxide or modified polyphenylene oxide is 5 to 50% of the proportion by weight of the polyester resin used.

7. Use according to one or more of claims 1 to 6, **characterised in that** the proportion by weight of the additive polyphenylene oxide or modified polyphenylene oxide is 8 to 20% of the proportion by weight of the polyester resin used.

8. Use according to one or more of claims 1 to 7, **characterised in that** a solution of maleic acid resin in styrene is used as the polyester resin.

## Revendications

1. Emploi d'une masse à mouler durcissable, à base de résine de polyester, pour la fabrication de réflecteurs de projecteurs, laquelle masse à mouler contient, en tant qu'adjuvant, un poly(phénylène oxyde) ou un poly(phénylène oxyde) modifié.

2. Emploi conforme à la revendication 1, **caractérisé en ce que** le poly(phénylène oxyde) ou poly(phénylène oxyde) modifié employé comme adjuvant présente un point Vicat B50/60N (ISO 306, méthode B) de 100 à 220 °C.

3. Emploi conforme à la revendication 2, **caractérisé en ce que** le poly(phénylène oxyde) ou poly(phénylène oxyde) modifié employé comme adjuvant présente un point Vicat B50/60N (ISO 306, méthode B) de 110 à 150 °C.

4. Emploi conforme à l'une ou plusieurs des revendications 1 à 3, **caractérisé en ce qu'**on emploie comme adjuvant un poly(phénylène oxyde) qui présente un point Vicat B50/60N de 203 °C.

5. Emploi conforme à l'une ou plusieurs des revendications 1 à 3, **caractérisé en ce qu'**on emploie comme adjuvant un poly(phénylène oxyde) qui présente un point Vicat B50/60N de 115 °C.

6. Emploi conforme à l'une ou plusieurs des revendications 1 à 5, **caractérisé en ce que** le poids du poly(phénylène oxyde) ou du poly(phénylène oxyde) modifié employé comme adjuvant représente de 5 à 50 % du poids de la résine de polyester employée.

7. Emploi conforme à l'une ou plusieurs des revendications 1 à 6, **caractérisé en ce que** le poids du poly(phénylène oxyde) ou du poly(phénylène oxyde) modifié employé comme adjuvant représente de 8 à 20 % du poids de la résine de polyester employée.

8. Emploi conforme à l'une ou plusieurs des revendications 1 à 7, **caractérisé en ce qu'**on emploie, en tant que résine de polyester, une solution de résine d'acide maléique dans du styrène.
